Europäisches Patentamt

European Patent Office

Office européen des brevets

(11) Publication number: **0 630 665 A2**

## EUROPEAN PATENT APPLICATION

(21) Application number: **94106874.4**

(22) Date of filing: **03.05.94**

(51) Int. Cl.5: **A63B 37/00**

(30) Priority: **10.05.93 US 59776**

(43) Date of publication of application:
**28.12.94 Bulletin 94/52**

(84) Designated Contracting States:
**AT BE CH DE DK ES FR GB GR IE IT LI LU MC NL PT SE**

(71) Applicant: **WILSON SPORTING GOODS COMPANY**
**8700 West Bryn Mawr**
**Chicago,**
**Illinois 60631 (US)**

(72) Inventor: **Proudfit, James R.**
**1525 Woodhaven Drive**
**Humbold,**
**Tennessee 39343 (US)**

(74) Representative: **Hiebsch, Gerhard F., Dipl.-Ing.**
**Hiebsch & Peege**
**Patentanwälte,**
**Heinrich-Weber-Platz 1**
**D-78224 Singen (DE)**

(54) Golf ball with cover formed from hard and soft ionomer resins.

(57) A golf ball is provided with a cover which is formed from a blend of lithium ionomer resin having a flexural modulus of at least 60,000 psi and a zinc ionomer resin having a flexural modulus within the range of 2800 to 8500 psi.

EP 0 630 665 A2

Background

This invention relates to golf balls, and, more particularly, to a golf ball having a cover which is formed from a blend of hard and soft ionomer resins. More particularly, the cover is formed from a blend of hard lithium ionomer resin and soft zinc ionomer resin.

Golf balls which are currently available fall into two general categories -- balls which include a balata cover and balls which include a more durable, cut-resistant cover. Balata covers are made from natural balata, synthetic balata, or a blend of natural and synthetic balata. Natural rubber or other elastomers may also be included. Synthetic balata is trans polyisoprene and is commonly sold under the designation TP-301 available from Kuraray Isoprene Company Ltd.

Most cut-resistant covers utilize Surlyn ionomers, which are ionic copolymers available from E.I. du Pont de Nemours & Co. Surlyn ionomers are copolymers of olefin, typically ethylene, and an alpha-beta ethylenically unsaturated carboxylic acid, such as methacrylic acid. Neutralization of a number of the acid groups is effected with metal ions, such as sodium, zinc, lithium, and magnesium. DuPont's U.S. Patent No. 3,264,272 describes procedures for manufacturing ionic copolymers. Ionic copolymers manufactured in accordance with U.S. Patent No. 3,264,272 may have a flexural modulus of from about 14,000 to about 100,000 psi as measured in accordance with ASTM method D-790. DuPont's U.S. Patent No. 4,690,981 describes ionic copolymers which include a softening comonomer. Ionic copolymers produced in accordance with U.S. Patent No. 4,690,981 are considered "soft" ionic copolymers and have a flexural modulus of about 2800 to about 8500 psi. The disclosures of Patent Nos. 3,264,272 and 4,690,981 are incorporated herein by reference.

Other cut-resistant materials which can be used in golf ball covers are ionic copolymers or ionomers available from Exxon under the name Iotek, which are similar to Surlyn ionomers except that acrylic acid is used rather than methacrylic acid.

The ionomer resins generally fall into three categories which are characterized by hardness or stiffness -- standard, high modulus, and low modulus. The standard resins have a flexural modulus in the range of about 30,000 to about 55,000 psi as measured by ASTM Method D-790. (Standard resins are referred to as "hard Surlyns" in U.S. Patent No. 4,884,814.) The high modulus resins have a flexural modulus in the range of about 55,000 to about 100,000 psi. The low modulus resins have a flexural modulus in the range of about 2800 to about 8500 psi.

Standard Surlyn resins include 8940 (sodium), 9910 (zinc), 7930 (lithium). Standard Iotek resins include 8000 (sodium), 8020 (sodium), 8030 (sodium), 4000 (zinc), and 4010 (zinc).

Low modulus ionomers are described in U.S. Patent 4,690,981 and include a softening comonomer. Specific low modulus Surlyn resins include 8120 (sodium), 8320 (sodium), and 9320 (zinc).

Specific high modulus Surlyn resin include 8220 (sodium), 8240 (sodium), 9220 (zinc), 7930 (lithium), and 9740 (lithium).

The term "3 piece" is commonly used to refer to a golf ball which has a center, a layer of elastic windings over the center, and a cover. The term "2 piece" is used to refer to a golf ball which has a solid core and a cover. Conventional balata-covered balls are 3 piece balls. Ionomer-covered balls an be either 3 piece or 2 piece balls.

A number of golfers, primarily professional and low handicap golfers, prefer balata-covered balls because of the higher spin rate, control, "feel," and "click" which balata provides. "Feel" is the overall sensation imparted to a golfer when the ball is hit, and "click" refers to the sound made when the clubhead hits the ball. However, balata-covered balls are more expensive and are less resistant to cutting than ionomer-covered balls.

Originally, ionomer-covered balls felt harder and had a much lower spin rate than balata-covered balls. In order to produce softer balls with higher spin rates, ionomers with lower flexural moduli were used. Some balls used various blends of a hard ionomer having a relatively high flexural modulus and a soft ionomer having a relatively low flexural modulus. However, varying one of the physical properties of one of the ionomers used in a golf ball cover usually affects one or more of the performance parameters of a golf ball, including feel, spin rate, initial velocity, distance, cut resistance, durability, etc. If a soft ionomer is used to improve feel and spin, other factors such as distance and cut resistance are often adversely affected. Also, the relative amounts of the different ionomers in the blend can also affect the properties of the ball.

U.S. Patent No. 3,819,768 describes early ionomer covers for golf balls. The specific covers described in the patent are made from a blend of sodium Surlyn ionomer and zinc Surlyn ionomer. The patent also describes using other ions, including lithium ions, to neutralize the ionomer. It is believed that all of the ionomers which were commercially available at that time were relatively hard ionomers which had a flexural modulus of at least 50,000 psi.

U.S Patent No. 4,431,193 describes a golf ball with a two-layer cover. The inner layer is formed from a hard ionomer resin having a high flexural modulus, and the outer layer is formed from a soft ionomer resin having a low flexural modulus. The specific hard ionomer described in Surlyn 1605, which is a sodium Surlyn having a flexural modulus of about 51,000. The specific soft ionomer described is Surlyn 1855, which is a zinc Surlyn having a flexural modulus of about 14,000.

U.S. Patent No. 4,884,814 describes a golf ball cover which is formed from a blend of hard Surlyn and soft Surlyn. The hard Surlyn is described as a high modulus ionomer having a flexural modulus of from about 30,000 to 55,000 psi, and the soft Surlyn is a low modulus ionomer having a flexural modulus of from about 3,000 to about 7,000 psi. The specific ionomers described in the patent are sodium and zinc.

U.S. Patent No. 5,120,791 describes a golf ball cover which is formed from a blend of a hard sodium or zinc ionomer and a soft acrylic acid based sodium or zinc ionomer. The hard ionomer is described as having a flexural modulus of from about 15,000 to about 70,000 psi, and the soft ionomer is described as having a flexural modulus of from about 2,000 to 10,000 psi.

Since about 1986 DuPont has been offering lithium Surlyn to golf ball manufacturers. DuPont Research Disclosure No. 27221 describes golf ball covers using lithium ionomers or blends of lithium ionomers and other ionomers. An early DuPont lithium Surlyn which was used in golf ball covers was AD-8118 Surlyn, which has a flexural modulus of about 61,000 psi. Wilson Staff three piece golf balls sold by Wilson Sporting Goods Co. in 1988 had covers made from a blend of lithium Surlyn AD-8118 and low modulus sodium Surlyn 8265. The sodium Surlyn 8265 had a flexural modulus of about 7000 psi.

U.S. Patent No. 5,000,459 describes a golf ball cover which is formed from a blend of lithium and sodium Surlyn. The specific lithium Surlyn described in the patent is 8118. The sodium Surlyns described in the patent are 8660 and 8920. The sodium Surlyns 8660 and 8920 have flexural moduli of about 34,000 psi and 55,000 psi, respectively.

U.S. Patent No. 5,068,151 describes a golf ball cover formed from either lithium ionomer or a blend of lithium ionomer and di- or tri-valent metal neutralized ionomer, for example, zinc ionomer. The patent does not describe the flexural modulus of the ionomers, but it does describe the Shore D hardness and the melt index. The Shore D hardness of the lithium ionomer was 60 to 80, and the melt index as 0.5 to 5.0. The Shore D hardness and the melt index of the zinc ionomer was also 60 to 80 and 0.5 to 5.0.

The foregoing description of the prior art evidences intense activity by golf ball manufacturers to optimize golf ball covers to provide a golf ball with good cut resistance, feel, spin, and distance. However, because improvement in one property often results in a decrease in another property, golf ball companies have continued to search for ways to improve the performance of golf balls.

## Summary of the Invention

I have found that excellent results can be obtained by utilizing a golf ball cover which is made from a blend of a high modulus or hard lithium ionomer and a low modulus or soft zinc ionomer. The preferred ionomers are lithium Surlyn 7930 and zinc Surlyn 9320, and the preferred blend is a 50/50 blend of the hard and soft ionomers. Lithium Surlyn 7930 has a flexural modulus of about 67,000 psi, and zinc Surlyn 9320 has a flexural modulus of about 3500 psi Golf balls utilizing such a cover have a soft feel and a high spin rate, comparable to a balata-covered ball, yet have good distance and cut resistance.

## Description of the Drawing

Figure 1 is a cross section of a two piece ball formed in accordance with the invention; and
Figure 2 is a cross section of a three piece ball formed in accordance with the invention.

## Description of Specific Embodiments of the Invention

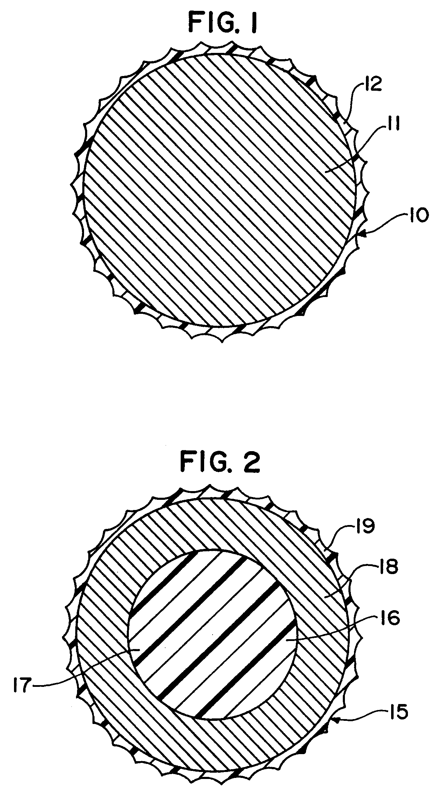

Figure 1 illustrates a two piece golf ball 10 which includes a solid core 11 and a cover 12. The cover is formed primarily from a blend of a relatively hard ionomer having a high flexural modulus and a relatively soft ionomer having a low flexural modulus. The cover may also include other conventional ingredients such as zinc oxide, titanium dioxide, blue toner, and optical brightener. The thickness of the cover is conventional and within the range of about .085 to .090 inch. The diameter of the core is about 1.500 to 1.510 inch and the outside diameter of the ball is about 1.680 inch.

Figure 2 illustrates a three piece golf ball 15 which includes a wound core 16 which comprises a center 17 and a layer 18 of windings of elastic thread. The center may be solid or a liquid-filled balloon. Such wound cores are also conventional. A cover 19 is formed primarily from a blend of a relatively hard ionomer and a relatively soft ionomer. The cover may also include other conventional ingredients. The thickness of the cover is within the range of about .065 to .075 inch. The outside diameter of the ball is about 1.680 inch. I have found that a blend of a high modulus, hard lithium ionomer having a flexural modulus of at least 60,000 psi and a low modulus, soft zinc ionomer having a flexural modulus within the range of about 2800 to 8500 psi provides a golf ball cover which not only has good cut resistance but also provides good feel, a high spin rate, and good distance. The ratio of the high modulus and low modulus ionomers can vary within a range of about 60/40 to 40/60. The preferred embodiment uses lithium Surlyn 7930 and zinc Surlyn 9320 in a ratio of about 50/50.

Lithium Surlyn 7930 and zinc Surlyn 9320 have the physical properties set forth in Table I.

TABLE I

|  | units | 7930 | 9320 |
|---|---|---|---|
| flexural modulus | kpsi | 67 | 3.5 |
| melt flow index | g/10 min | 1.8 | 0.6 |
| specific gravity |  | 0.94 | 0.94 |
| tensile strength | kpsi | 3.8 | 2.5 |
| elongation | % | 290 | 600 |
| hardness, Shore D (ASTM D-2240) |  | 68 | 40 |

Example I

Two-piece golf balls were made using cores having the composition described in Table II.

TABLE II

| Composition of Core (Parts by Weight) | |
|---|---|
| Polybutadiene | 100.0 |
| ZDA (zinc diacrylate) | 33.0 |
| ZnO | 21.0 |
| A02246 | 1.0 |
| Dicumyl Peroxide | 2.25 |
| Total | 157.25 |

A02246 is an antioxidant available from R.T. Vanderbilt Co. of Norwalk, Connecticut under the trade name Vanox MBPC.

The covers for the golf balls had the composition described in Table III.

TABLE III

| Composition of Cover (Parts by Weight) | |
|---|---|
| Surlyn 7930 | 50.0 |
| Surlyn 9320 (AD8270) | 50.0 |
| Color Concentrate #29835R7 | 8.0 |
| Total | 108.0 |

The color concentrate of Table III had the following composition (parts by weight):

| Surlyn 8940 | 100.000 |
|---|---|
| TiO$_2$ | 72.423 |
| Ultramarine Blue | .006 |
| Ultramarine Violet | .006 |

Ultramarine Blue and Ultramarine Violet are toners available from Whittaker, Clark & Daniels, Inc. of South Plainfield, New Jersey.

The cover composition was injection molded over the solid core in the conventional manner. Alternatively, and also conventionally, the cover material can be injection molded into hemispherical half shells, and two half shells can be compression molded over a solid or wound core.

The molded cover material had a flexural modulus of about 14,920 psi and a Shore D hardness of about 57.

The cover of the Example I balls is referred to as a 50/50 blend of Surlyn 7930 and Surlyn 9320. In fact, the Surlyn composition of the cover also includes the Surlyn contained in the color concentrate or master batch which contains additional Surlyn as well as the other ingredients of the cover.

Golf balls of Example I were compared with a commercial ball which is sold under the name Tour Edition 100. The Tour Edition 100 ball is advertised as a cut-resistant ball which has feel and playing characteristics similar to balata-covered balls. The comparative physical data is set forth in Table IV.

TABLE IV

| | diameter (inches) | weight (grams) | compression | durability | initial velocity (feet/sec) |
|---|---|---|---|---|---|
| Tour Edition | 1.679 | 45.5 | 115.8 | 100 | 248.7 |
| Example I | 1.678 | 45.4 | 93.8 | 96.8 | 248.5 |

Compression is a measure of a golf ball's deflection at a specified load. A universal piece of testing equipment used in the golf ball industry for measuring compression is a ATTI compression tester as purchased from Atti Engineering Corp., 108-110 36th St., Union City, New Jersey 07087.

Durability is a measure of a golf ball to withstand repeated impacts against a thick metal plate @ 175 FPS. Wilson's procedure is to subject 20 balls to repeated impacts up to 100, then average the # of hits to failure for each group.

Initial velocity is measured in accordance with the standards of the United States Golf Association.

The golf balls were flight tested with an automatic hitting machine using drivers having various lofts (launch angles), a 5 iron, and a 9 iron. The hitting machine was adjusted to swing the drivers at 150 feet per second (fps) at impact (hard driver) and at 130 fps (soft driver). The comparative flight test data is formed in Table V.

## TABLE V

**Hard Driver (150 fps) - 7° Launch Angle**

|                  | Carry | Difference | Total | Difference |
|------------------|-------|------------|-------|------------|
| Tour Edition 100 | 251.2 | base       | 264.7 | base       |
| Example I        | 251.5 | +0.3       | 261.8 | -2.9       |

**Hard Driver (150 fps) - 9° Launch Angle**

|                  | Carry | Difference | Total | Difference |
|------------------|-------|------------|-------|------------|
| Tour Edition 100 | 260.1 | base       | 264.0 | base       |
| Example I        | 261.9 | +1.8       | 271.0 | +7.0       |

**Hard Driver (150 fps) - 11° Launch Angle**

|                  | Carry | Difference | Total | Difference |
|------------------|-------|------------|-------|------------|
| Tour Edition 100 | 251.4 | base       | 253.4 | base       |
| Example I        | 256.4 | +5.0       | 260.3 | +6.9       |

**Soft Driver (130 fps) - 10° Launch Angle**

|                  | Carry | Difference | Total | Difference |
|------------------|-------|------------|-------|------------|
| Tour Edition 100 | 214.1 | base       | 218.1 | base       |
| Example I        | 217.7 | +3.6       | 226.0 | +7.9       |

**5 iron (110 fps) - 15° Launch Angle**

|                  | Carry | Difference | Total | Difference |
|------------------|-------|------------|-------|------------|
| Tour Edition 100 | 156.3 | base       | 164.2 | base       |
| Example I        | 161.6 | +5.3       | 171.8 | +7.6       |

**9 iron (80 fps) - 19° Launch Angle**

|                  | Carry | Difference | Total | Difference |
|------------------|-------|------------|-------|------------|
| Tour Edition 100 | 119.6 | base       | 122.7 | base       |
| Example I        | 120.1 | +1.5       | 123.7 | +1.0       |

## Spin Comparison

|  | Hard Driver | 9 Iron |
|---|---|---|
| Tour Edition | 3850 (RPM) | 8930 (RPM) |
| Example I | 3460 (RPM) | 7880 (RPM) |

## Coefficient of Restitution (C.O.R.)

|  | 150FPS | 175FPS | 200FPS |
|---|---|---|---|
| Tour Edition | .7442 | .7156 | .6847 |
| Example I | .7749 | .7445 | .7141 |

Cut Resistance

Balls formed in accordance with Example I were subjected to the standard Wilson cut resistance test.

The cut resistance test is conducted using a Tru Temper driving Machine. The test club used is a pitching wedge. Six (6) balls of each type are tested and hit one time each approximately 1/4 inch above the centerline of the ball, (random orientation), at standard clubhead velocities.

| Factor | Description |
|---|---|
| 10 | No visible mark |
| 9 | Must search to find mark |
| 8 | Visible dent |
| 7 | Feel with fingernail |
| 6 | Fingernail inserts - cut |
| 5 | Fingernail inserts to core - core not visible |
| 4 | Core visible - core not cut |
| 3 | Core just cut |
| 2 | Core cut deep |
| 1 | Core destroyed |

The factors of the six (6) golf balls of each type are averaged to obtain an overall factor. The golf balls are evaluated by relative comparison with other golf balls of known cut resistance.

The inventive balls formed in accordance with Example I were compared to Tour Edition, the comparative cut resistance data is as follows:

| Ball I.D. | Cut resistance factor |
|---|---|
| Tour Edition | 6.6 |
| Example I | 8.2 |

The data presented illustrates that the inventive ball (Example I), is significantly improved for cut resistance over the Tour Edition 100 ball.

The flight test data comparison of the Tour Edition 100 ball and the balls of Example I shows that the hard driver hit at the average launch angle of 9 degrees, soft driver and 5 iron hits are significantly longer in both carry and total flight distances than the Tour Edition 100 ball. The Example I ball has a higher C.O.R. than Tour Edition 100.

While in the foregoing specification a detailed description of specific embodiments of the invention were set forth for the purpose of illustration, it will be understood that many of the details herein given may be

7

varied considerably by those skilled in the art without departing from the spirit and scope of the invention.

**Claims**

1. A golf ball comprising a core and a cover, the cover comprising a blend of a lithium ionomer resin having a flexural modulus of at least 60,000 psi and a zinc ionomer resin having a flexural modulus within the range of about 2800 to 8500 psi.

2. The golf ball of claim 1 in which the cover includes from 60 to 40 parts by weight of the lithium ionomer resin and from 40 to 60 parts parts by weight of the zinc ionomer resin.

3. The golf ball of claim 1 in which the cover includes from about 50 parts by weight of the lithium ionomer resin and from about 50 parts parts by weight of the zinc ionomer resin.

4. The golf ball of claim 1 in which the flexural modulus of the zinc ionomer resin is about 3500 psi.

5. The golf ball of claim 4 in which the flexural modulus of the lithium ionomer resin is about 67,000 psi.

6. The golf ball of claim 1 in which the lithium ionomer resin is lithium Surlyn 7390 and the zinc ionomer resin is zinc Surlyn 9320.

7. The golf ball of claim 6 in which the cover includes from 60 to 40 parts by weight of the lithium ionomer resin and from 40 to 60 parts parts by weight of the zinc ionomer resin.

8. The golf ball of claim 6 in which the cover includes from about 50 parts by weight of the lithium ionomer resin and from about 50 parts parts by weight of the zinc ionomer resin.

FIG. 1

FIG. 2